# EUROPÄISCHE PATENTSCHRIFT

(11) **EP 1 692 360 B1**
(45) Veröffentlichungstag und Bekanntmachung des Hinweises auf die Patenterteilung: **11.01.2017**
(21) Anmeldenummer: 04819627.3
(22) Anmeldetag: 27.11.2004
(51) Int. Cl.: E05F 5/02, E05F 5/10, F16F 9/34

(54) **ANSCHLAGDÄMPFER**
END-STOP DAMPER
AMORTISSEUR À BUTÉE

(30) Priorität: 02.12.2003 DE 10356234; 14.09.2004 DE 102004044898
(43) Veröffentlichungstag der Anmeldung: 23.08.2006
(73) Patentinhaber: KARL SIMON GmbH & Co. KG, D-78733 Aichhalden (DE)
(72) Erfinder: BANTLE, Ulrich, 72186 Empfingen (DE); ESCHLE, Jürgen, 78733 Aichhalden (DE)
(74) Vertreter: Herrmann, Jochen
(86) Internationale Anmeldenummer: PCT/EP2004/013503
(87) Internationale Veröffentlichungsnummer: WO 2005/054614

(56) Entgegenhaltungen:
- DE-A1- 10 226 124
- DE-A1- 19 931 362
- DE-U1- 20 107 426
- GB-A- 283 826
- US-A- 4 110 868

## Beschreibung

Die Erfindung betrifft einen Anschlagdämpfer, wie er beispielsweise im Möbelbau und insbesondere bei Möbeltüren und Schubkästen verwendet wird.

Aus dem Stand der Technik sind Dämpfungselemente bekannt, welche dazu dienen, Möbeltüren und Schubkästen sanft in ihre geschlossene Endstellung fallen zu lassen. Dabei soll eine stoßartige und damit störende Berührung von Möbelteilen verhindert, der Verscheiß eingeschränkt und eine geräusch- und stoßdämpfende Wirkung erzielt werden.

Die bekannten Dämpfungselemente weisen im wesentlichen ein elastisches Anschlagelement auf, welches in einer im Möbelkörper angebrachten Sackbohrung fixiert ist. Auch kann das Anschlagelement am Möbelkörper aufgeklebt sein. Ein derartiges Anschlagelement steht über die ebene Fläche des Möbelkörpers hervor und mindert durch seine elastische Verformbarkeit den Aufprall eines weiteren Möbelteils wie etwa einer Möbeltür.

Insbesondere bei Wandhängeschränken mit an horizontal verlaufenden Drehscharnieren gelagerten Schranktüren und bei mit Truhen gelenkig verbundenen Deckeln ergibt sich jedoch die Problematik, dass die Schranktüren bzw. Truhendeckel aufgrund ihres Eigengewichts mit einem großen Impuls auf die angebrachten herkömmlichen Dämpfungselemente auftreffen. Dabei sind die Dämpfungselemente nicht in der Lage, derartige starke Stöße in befriedigender Weise zu dämpfen. Die herkömmlichen Dämpfungselemente müssten hierzu unverhältnismäßig groß dimensioniert sein, so dass ein vollständiges Verschließen der Schranktür nicht möglich wäre.

Ein derartiger Anschlagdämpfer ist aus den Patent Abstracts of Japan, Veröffentlichungsnummer 2001140530 A, bekannt. Der bekannte Anschlagdämpfer umfasst ein in einem langgestreckten Dämpferkörper mit einem offenen und einem geschlossenen Ende geführtes Anschlagelement. Der Dämpferkörper weist einen Aufnahmeraum für die Aufnahme eines mit dem Anschlagelement verbundenen Gleitstücks auf, an dessen Außenkontur eine oder mehrere Gleitflächen angeordnet sind, die an einem dem offenen Ende des Dämpferkörpers zugeordneten Innenwandungsabschnitt des Aufnahmeraumes anliegen. An dem in den Aufnahmeraum hineinreichenden Ende des Gleitstückes ist eine an der Innenkontur des Aufnahmeraumes anliegende Dichteinrichtung angeordnet. Das in den Aufnahmeraum hineinreichende Ende des Gleitstückes und die Dichteinrichtung bilden mit der Innenkontur des Aufnahmeraumes einen Hohlraum, in welchem bei Druckbeaufschlagung des Gleitstückes ein durch den sich aufbauenden Luftdruck im Hohlraum erzeugter Gegendruck auf das Gleitstück ausgeübt wird. Der Hohlraum weist zum Abbau des Luftdruckes zumindest eine Öffnung für das Entweichen der Luft auf.

Der Dämpfungseffekt bei einem derartigen Anschlagdämpfer ergibt sich daraus, dass die Öffnung, die als Bohrung im geschlossenen Ende des Dämpfungskörper ausgeführt ist, sehr klein gewählt wird, so dass zum Abbau des Luftdrucks im Hohlraum die Luft langsam entweicht. Der typische Durchmesser einer derartigen Bohrung beträgt etwa 0,1mm. Da Anschlagdämpfer in der Massenfertigung meist im Spritzgussverfahren hergestellt werden und es sehr schwierig ist, eine solchermaßen kleine Bohrung in diesem Herstellungsverfahren auszubilden, ist der gewünschte Dämpfungseffekt nicht zuverlässig gegeben. Zudem treten in der Praxis im Dauereinsatz Probleme mit der Maßhaltigkeit derart kleiner Bohrungen auf. Dies führt zu einer Aufweitung des Bohrungsdurchmessers und somit zu einer Verschlechterung der Dämpfungswirkung.

Ein Anschlagdämpfer mit den Merkmalen des Oberbegriffs des Anspruchs 1 ist aus US-A-4110868 bekannt.

Es ist Aufgabe der Erfindung, einen Anschlagdämpfer der vorstehend beschriebenen Art anzugeben, welcher bei einem einfachen Aufbau eine effektive Dämpfungswirkung auch im Dauereinsatz gewährleistet.

Diese Aufgabe der Erfindung wird durch die Merkmale des Anspruches 1 gelöst. Die Unteransprüche betreffen vorteilhafte Weiterbildungen des erfindungsgemäßen Anschlagdämpfers.

Demgemäss ist vorgesehen, dass mit der Öffnung ein Dämpfungsglied zusammenwirkt, welches für die durch die Öffnung entweichende Luft einen Strömungswiderstand bildet. Bei Verwendung eines derartigen Dämpfungsgliedes ist es nicht notwendig, die Öffnung bzw. Bohrung besonders klein zu wählen, um das komprimierte Luftvolumen langsam entweichen zu lassen. Vielmehr kann die Öffnung nahezu beliebig groß gewählt werden, da das Luftvolumen durch das Dämpfungsglied strömt und gedämpft entweicht. Öffnungen mit einem Durchmesser größer 0,1mm können auch im Spritzgussverfahren realisiert werden. Um die gewünschte Dämpfungswirkung zu erreichen, kommt es nicht so sehr auf einen exakt vorgegebenen Durchmesser der Öffnung sondern vielmehr auf das verwendete Dämpfungsglied an.

So kann das Dämpfungsglied ein poröses Material als Luftströmungswiderstand aufweisen. Bei einem derartigen Material strömt die Luft durch eine Vielzahl enger Strömungswege, so dass ein gewünschter Strömungswiderstand erreicht wird.

In konkreter Ausbildung kann das Dämpfungsglied ein Element aus Sintermaterial, aus Kunststoffschaum, aus Textilmaterial, aus Filzmaterial oder aus dergleichen einen Luftströmungswiderstand bildenden Material aufweisen. Es steht eine ganze Reihe geeigneter Materialien zur Verfügung, welche sich hinsichtlich der Bearbeitbarkeit, der Widerstandsfähigkeit, der Zusetzbarkeit durch Partikel in der Luft und anderen Materialeigenschaften unterscheiden. Jedoch haben die zu verwendenden Materialien gemeinsam, dass sie durchströmbar sind und der Luftströmung einen Widerstand entgegensetzen, welcher zu einer Dämpfung im Anschlagdämpfer führt.

Die zu durchströmende Öffnung kann am geschlossenen Ende des Dämpferkörpers angeordnet sein. In diesem Bereich lässt sich die Öffnung fertigungstechnisch besonders einfach ausbilden. Dabei kann der Durchmesser der Öffnung von größer 0,1mm bis hin zum Innendurchmesser des Hohlraumes gewählt werden. Das Dämpfungsglied kann in einem am Dämpferkörper ausgebildeten Haltebereich eingepasst angeordnet sein, wobei die gesamte Luftströmung das Dämpfungsglied durchströmt. Wenn als Durchmesser der Öffnung der Innendurchmesser des Hohlraumes gewählt ist, kann das Dämpfungsglied direkt in den Dämpferkörper eingepresst werden und das geschlossene Ende desselben definieren. Alternativ oder zusätzlich kann die Öffnung am Gleitstück angeordnet sein. Da das Gleitstück zumindest teilweise in den Außenbereich des Anschlagdämpfers reicht, gewährleistet eine am Gleitstück angebrachte Öffnung ein besonders gutes Entweichen der komprimierten Luft aus dem Hohlraum. Zu diesem Zweck kann in dem Gleitstück eine sich in dessen Erstreckungsrichtung angebrachte Bohrung vorgesehen sein die bis in den Hohlraum hinein reicht. Das Dämpfungsglied kann in einem am Dämpferkörper ausgebildeten Haltebereich eingepasst angeordnet sein, wobei die gesamte Luftströmung das Dämpfungsglied durchströmt. Dabei kann das Dämpfungsglied direkt in die Bohrung eingepresst werden.

Fertigungstechnisch kann es vorteilhaft sein, das Dämpfungsglied an der dem Hohlraum abgewandten Seite der Öffnung anzuordnen. Wenn ein Haltebereich an der dem Hohlraum abgewandten Seite der Öffnung ausbildbar ist, kann dort das Dämpfungsglied in geeigneter Weise eingepasst werden.

Alternativ oder zusätzlich kann das Dämpfungsglied an der dem Hohlraum zugewandten Seite der Öffnung angeordnet sein. Der Haltebereich befindet sich dann auf derselben Seite. Durch die vorgegeben Strömungsrichtung der Luft wird auch ein sicherer Halt im Haltebereich garantiert.

Auch kann das Dämpfungsglied innerhalb der Öffnung eingepasst sein. Diese Anordnung ist besonders dann vorteilhaft, wenn die Öffnung mit einem Durchmesser größer 0,1 mm ausgeführt ist.

Damit das Gleitstück im unbelasteten Zustand im wesentlichen selbständig ausfährt oder bis zum Anschlagen durch ein Möbelteil in ausgefahrener Stellung verbleibt, ist am Dämpferkörper eine im Aufnahmeraum angeordnete Feder vorgesehen. Die Feder drückt das Gleitstück zumindest teilweise aus dem Aufnahmeraum heraus. Gegen die Federkraft lässt sich das Gleitstück leicht in den Aufnahmeraum einschieben. Die Dämpfungswirkung wird in erster Linie durch den sich aufbauenden Luftdruck erzielt.

Die Dichteinrichtung weist zumindest eine elastische Dichtlippe auf. Bei einem sich aufbauenden Luftdruck im Hohlraum, der durch das in den Aufnahmeraum hineinreichende Ende des Gleitstückes mit der Dichteinrichtung und der Innenkontur des Aufnahmeraumes gebildet ist, wird die Dichtlippe an die Innenkontur des Aufnahmeraumes gedrückt, wodurch eine weitgehend luftdichte Gleitverbindung entsteht.

Eine besonders wirkungsvolle und gleichzeitig kostengünstige Ausführungsform wird dadurch gebildet, dass die elastische Dichtlippe im wesentlichen in Richtung auf das geschlossene Ende des Aufnahmeraumes hin geneigt ist. Dabei ist die Dichtlippe zumindest teilweise von der Außenkontur des Gleitstückes beabstandet und am in den Aufnahmeraum hineinreichenden Ende des Gleitstückes angeordnet ist.

Damit das Gleitstück trotz des beim Herausziehen, bzw. beim Herausdrücken durch die Feder im Hohlraum erzeugten Unterdrucks in eine maximale Ausfahrposition gebracht werden kann, lässt die Dichtlippe ein Nachströmen von Luft in den Hohlraum zu. Dabei ist die elastische Dichtlippe der Dichteinrichtung in der Beabstandung zwischen der Innenkontur des Aufnahmeraumes und der Außenkontur des Gleitstücks beim zumindest teilweisen Herausziehen des Gleitstücks aus dem Aufnahmeraum aufgrund des im Hohlraum entstehenden Unterdrucks von der Innenkontur des Aufnahmeraumes beabstandet. Somit kann Luft durch die Beabstandung zwischen der Innenkontur des Aufnahmeraumes und der Außenkontur des Gleitstücks an der Dichtlippe vorbei in den Hohlraum einströmten. Eine besonders einfach aufgebaute und gleichzeitig wirkungsvolle Gleitführung wird dadurch geschaffen, dass an dem dem offenen Ende des Dämpferkörpers zugeordneten Innenwandungsabschnitt des Aufnahmeraumes zumindest ein Vorsprung ausgebildet ist, welcher an der oder den Gleitflächen des Gleitstücks in Anlage steht. Zusammen mit der Dichteinrichtung, welche im unteren Teil des Dämpferkörpers an der Innenwandung des Aufnahmeraumes eine stützende und abdichtende Gleitführung bildet, wird das Gleitstück im Aufnahmeraum sicher geführt.

Damit das Gleitstück sich nicht vollständig aus dem Aufnahmeraum herausziehen bzw. durch die Feder herausdrücken lässt, ist zwischen der Außenkontur des Gleitstücks und der Innenkontur des Aufnahmeraumes zumindest ein Vorsprung angeordnet. Dieser Vorsprung schlägt bei zumindest teilweisem Herausziehen des Gleitstücks aus dem Aufnahmeraum an demjenigen Vorsprung an, der an dem dem offenen Ende des Dämpferkörpers zugeordneten Innenwandungsabschnitt des Aufnahmeraumes ausgebildet ist. Somit wird auf einfache Weise eine wirkungsvoll Anschlagbegrenzung geschaffen.

Zur einfachen Montage des Anschlagdämpfers kann der Dämpferkörper in eine Sackbohrung in beispielsweise einem Möbelkörper eingeführt werden. Um die Einführtiefe des Dämpferkörpers in die Sackbohrung zu begrenzen, weist der Dämpferkörper an der seinem offenen Ende zugeordneten Außenkontur einen zumindest teilweise umlaufenden Ansatz auf.

Zur sicheren Aufnahme der Feder weist der Gleitkörper zumindest teilweise eine im wesentlichen in seiner Längserstreckungsrichtung verlaufende, an seinem dem geschlossenen Ende des Aufnahmeraumes zugeordneten Ende angebrachte, langgestreckte Ausnehmung auf, in welche sich die im Aufnahmeraum angeordnete Feder hineinerstreckt.

Damit der durch die langgestreckte Ausnehmung im Gleitstück erweiterte Hohlraum zwischen dem in den Aufnahmeraum hineinreichenden Ende des Gleitstückes und der Innenkontur des Aufnahmeraumes im eingeschobenen Zustand des Gleitstücks minimiert wird, ist an der Innenkontur des geschlossenen Endes des Aufnahmeraumes ein sich in Längserstreckungsrichtung des Aufnahmeraumes erstreckender Stift ausgeformt. Der Stift erstreckt sich im vollständig eingeschobenen Zustand des Gleitstücks in dessen in Längserstreckungsrichtung verlaufende Ausnehmung im wesentlichen vollständig hinein.

Um weiterhin die Feder besonders platzsparend bei gleichzeitiger Minimierung des Hohlraumvolumens im eingeschobenen Zustand des Gleitstückes unterzubringen, kann die im Aufnahmeraum angeordnete Feder über den Stift geführt und an dessen Außenkontur beweglich angeordnet sein, so dass der Federweg nicht behindert ist. Gleichzeitig kann zwischen dem Stift und der in Längserstreckungsrichtung verlaufenden Ausnehmung im Gleitstück eine Beabstandung ausgebildet sein, sodass die Feder an der Innenkontur der Ausnehmung beweglich angeordnet und deren Federweg nicht behindert ist.

Eine besonders effektive Minimierung des Hohlraumvolumens wird dadurch erreicht, dass bei im wesentlichen vollständig eingeschobenem Gleitstück die Feder in der Beabstandung zwischen dem Stift und der Ausnehmung auf Block gefahren ist.

Das Anschlagelement kann einen Anschlagkopf aufweisen, welcher am offenen Ende des Dämpfungskörpers über den Randbereich der Öffnung zumindest teilweise hinausragt und bei im wesentlichen vollständig eingeschobenem Gleitstück an dem Randbereich anschlägt und somit eine zusätzliche Begrenzung der Einschubtiefe des Gleitstücks in den Aufnahmeraum im Dämpferkörper definiert.

In der fertigungstechnisch einfachsten Ausführungsform kann der Gleitkörper mit der Dichteinrichtung einstückig ausgebildet sein.

Um beispielsweise eine Schranktür am Möbelkörper lösbar in Schließstellung zu halten, kann das Anschlagelement eine magnetischen Schnappeinrichtung oder dergleichen Kontakteinrichtung zur lösbaren Verbindung des Anschlagdämpfers aufweisen.

Gemäß einer alternativen Ausgestaltungsvariante eines Anschlagdämpfers kann das Anschlagelement eine magnetischen Schnappeinrichtung oder dergleichen Kontakteinrichtung zur lösbaren Verbindung des Anschlagdämpfers mit einem Verbindungselement aufweisen. Bei diesem Querschnittverhältnis kann ein kontinuierlicher Druckabbau mit ausreichender Dämpfungswirkung erreicht werden. Dabei ist die Dämpfung gerade so groß, dass der Anschlagdämpfer vorteilhaft im Möbelbau eingesetzt werden kann. Insbesondere erweist es sich dabei als vorteilhaft, wenn vorgesehen ist, das der Durchmesser der Öffnung kleiner als 0,1 mm ist.

Derartige Öffnungsquerschnitte sind für den beanspruchten Anwendungsfall untypisch und nur sehr schwer herzustellen. Es wird jedoch mit einem solchen Gestaltungsmerkmal möglich gezielt auf das variierende Strömungsverhalten während der Druckabbauphase einzuwirken, so dass eine gute Dämpfung für einen Anschlagdämpfer erreicht wird.

Die Erfindung wird im folgenden anhand von in den Zeichnungen dargestellten Ausführungsbeispielen näher erläutert.

### Es zeigen:

- Fig. 1: in Seitendarstellung und im Schnitt einen Anschlagdämpfer gemäß einer ersten Ausführungsform mit einem am geschlossenen Ende des Dämpferkörpers angeordneten Dämpfungsglied und vollständig ausgefahrenem Gleitstück;
- Fig. 2: in Seitendarstellung und im Schnitt einen Anschlagdämpfer gemäß einer weiteren Ausführungsform mit einem am Gleitstück angeordneten Dämpfungsglied, wobei das Gleitstück vollständig ausgefahren dargestellt ist;
- Fig. 3: in Seitendarstellung und im Schnitt einen Anschlagdämpfer gemäß noch einer weiteren Ausführungsform mit einem am geschlossenen Ende des Dämpferkörpers angeordneten Dämpfungsglied, einem im Hohlraum angeordneten Stift und vollständig ausgefahrenem Gleitstück;
- Fig. 4: in Seitendarstellung und im Schnitt einen Anschlagdämpfer gemäß Fig. 3 mit vollständig eingeschobenem Gleitstück;
- Fig. 5: in vergrößerter Teilseitendarstellung und im Teilschnitt der Figur 4 den unteren, geschlossenen Bereich des Dämpfungskörpers mit vollständig eingeschobenem Gleitstück gemäß der bevorzugten Ausführungsform;
- Fig. 6: in vergrößerter Teilseitendarstellung und im Teilschnitt der Figur 4 einen an der Außenkontur des Dämpfungskörper am offenen Ende des Aufnahmeraumes angeordneten Bereich gemäß der bevorzugten Ausführungsform;
- Fig. 7: in Teilseitendarstellung und im Teilschnitt den oberen, offenen Bereich des Dämpfungskörpers mit vollständig eingeschobenem Gleitstück gemäß einer alternativen Ausführungsform; und
- Fig. 8: in schematisch-perspektivischer Darstellung einen Möbelkörper mit Schließklappe, die durch einen Anschlagdämpfer gedämpft ist.

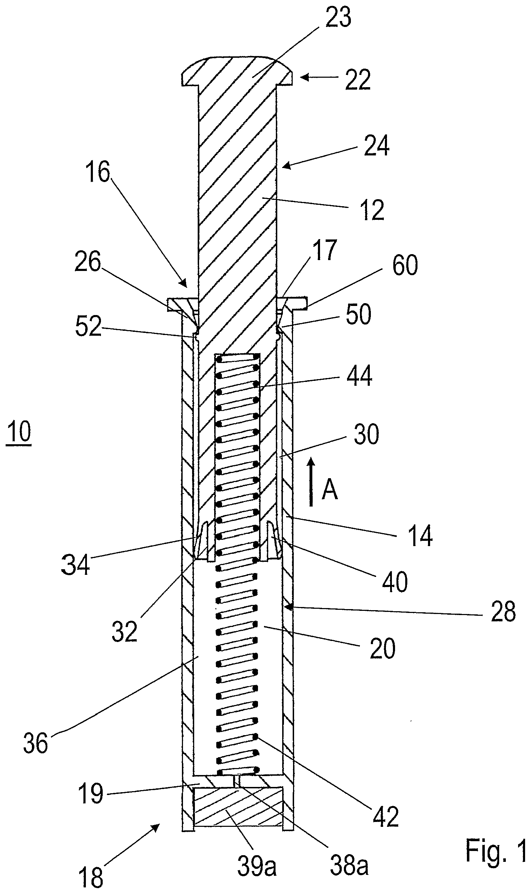

Die Figur 1 zeigt in Seitendarstellung und im Schnitt einen Anschlagdämpfer 10 gemäß einer ersten Ausführungsform mit einem am geschlossenen Ende 18 des Dämpferkörpers 14 angeordneten Dämpfungsglied 39a und vollständig ausgefahrenem Gleitstück 12. Der Anschlagdämpfer 10 besitzt einen langgestreckten, zylinderförmigen Dämpferkörper 14 mit einem oberen, offenen Ende 16 und einem unteren, geschlossenen Ende 18. Der Dämpferkörper 14 weist einen ebenfalls zylinderförmigen Aufnahmeraum 20 für die Aufnahme des mit einem Anschlagelement 22 verbundenen zylinderförmigen Gleitstücks 12 auf. Das Anschlagelement 22 weist einen Anschlagkopf 23 auf, welcher am offenen Ende 16 des Dämpfungskörpers 14 über den Randbereich 17 der Öffnung zumindest teilweise hinausragt und bei im wesentlichen vollständig eingeschobenem Gleitstück 12 an dem Randbereich 17 anschlägt.

Das Gleitstück 12 ist an seiner Außenkontur 24 mit einer Gleitfläche versehen, die an einem dem offenen Ende 16 des Dämpferkörpers14 zugeordneten Innenwandungsabschnitt 26 des Aufnahmeraumes 20 anliegen. Zwischen der Außenkontur 24 des Gleitstücks 12 und der Innenkontur 28 des Aufnahmeraumes 20 ist im gesamten unterhalb der Gleitführung 26 angeordneten Abschnitt ein Spalt 30 vorgesehen. An dem in den Aufnahmeraum 20 hineinreichenden Ende 32 des Gleitstückes 12 ist eine an der Innenkontur 28 des Aufnahmeraumes 20 anliegende Dichtlippe 34 angeordnet. Die Dichtlippe 34 ist mit dem Gleitstück 12 in einem Kunststoffspritzverfahren einstückig ausgebildet.

Das in den Aufnahmeraum 20 hineinreichende Ende 32 des Gleitstückes 12 bildet mit der Dichtlippe 34 und mit der Innenkontur 28 des Aufnahmeraumes 20 einen Hohlraum 36. In dem Hohlraum 36 wird bei Druckbeaufschlagung des Gleitstückes 12, beispielsweise durch eine (nicht gezeigte) Truhenklappe, ein durch den sich aufbauenden Luftdruck im Hohlraum 36 erzeugter Gegendruck in Richtung A auf das Gleitstück 12 ausgeübt.

Die elastische Dichtlippe 34 ist am in den Aufnahmeraum 20 hineinreichenden Ende 32 des Gleitstückes 12 angeordnet. Die elastische Dichtlippe 34 ist im wesentlichen in Richtung auf das geschlossene Ende 18 des Aufnahmeraumes 20 hin geneigt. Somit erstreckt sich die Dichtlippe 34 im wesentlichen in der Längserstreckungsrichtung und parallel zur Innenkontur des Aufnahmeraumes 20. Dabei bildet die Dichtlippe 34 an Ihrem in Richtung auf das geschlossene Ende des Aufnahmeraumes 20 gerichteten Bereich eine im Querschnitt etwa ringförmige Ausnehmung 40, welche Teil des Hohlraumes 36 ist. Bei einem sich im Hohlraum 36 aufbauenden Luftdruck wird somit auch der Luftdruck innerhalb der ringförmigen Ausnehmung 40 gleichermaßen ansteigen, so dass die Dichtlippe 34 an die Innenkontur 28 des Aufnahmeraumes 20 gedrückt und eine weitgehend luftdichte Gleitverbindung gebildet wird.

Beim zumindest teilweisen Herausziehen des Gleitstücks 12 aus dem Aufnahmeraum 20 entsteht aufgrund der Dichtwirkung der Dichtlippe 34 ein gewisser Unterdruck im Hohlraum 36 relativ zum Umgebungsdruck. Wenn dabei die elastische Dichtlippe 34 bezüglich ihrer Nachgiebigkeit entsprechend ausgelegt ist, kann diese aufgrund des höheren Luftdrucks in der Umgebung und dem damit in Kontakt stehende Spalt 30 von der Innenkontur 28 des Aufnahmeraumes 20 abgehoben werden. Dadurch kann Luft durch den Spalt 30 zwischen der Innenkontur 28 des Aufnahmeraumes 20 und der Außenkontur 24 des Gleitstücks 12 an der Dichtlippe 34 vorbei in den Hohlraum 36 einströmen, bis ein Druckausgleich hergestellt ist. Selbstverständlich kann die Dichtlippe 34 auch so steif ausgeführt werden, dass der Druckausgleich alleine über das Dämpfungsglied 39a stattfindet.

Der Dämpferkörper 14 weist eine im Aufnahmeraum 20 angeordnete Schraubenfeder 42 auf, die sich im Aufnahmeraum 20 von dem geschlossenen Ende 18 bis zum unteren Ende 32 des Gleitstücks 12 erstreckt. Die Feder 42 drückt das Gleitstück 12 zumindest teilweise aus dem Aufnahmeraum 20 heraus. Das Gleitstück 12 kann gegen die Federkraft der Feder 42 in den Aufnahmeraum 20 eingeschoben werden.

Der Gleitkörper 12 weist eine in seiner Längserstreckungsrichtung verlaufende, an seinem dem geschlossenen Ende 18 des Aufnahmeraumes zugeordneten Ende 32 angebrachte, langgestreckte Ausnehmung 44 auf, in welche sich die im Aufnahmeraum 20 angeordnete Feder 42 hineinerstreckt.

Am geschlossen Ende 18 ist eine Bodenplatte 19, gegen die sich die Feder 42 abstützt und welche den Hohlraum 36 begrenzt, einstückig am Dämpferkörper 14 ausgebildet. In die Bodenplatte 19 ist etwa mittig eine Öffnung 38a als Bohrung eingebracht. Auf der dem Hohlraum 36 abgewandten Seite der Bohrung 38a ist ein Dämpfungselement 39a aus einem porösen Material, beispielsweise einem Sintermaterial, angeordnet. Das Dämpfungselement 39a dient der aus der Öffnung 38a ausströmenden Luft als Strömungswiderstand.

Auf der dem Hohlraum 36 abgewandten Seite der Bodenplatte 19 ist am Dämpferkörper 14 ein Haltebereich 43a für das Dämpfungselement 39a ausgebildet. Der Haltebereich 43a ist als durch die Bodenplatte 19 vom Hohlraum 36 abgetrennte Fortsetzung des Hohlraumes 36 ausgebildet. In den Haltebereich 43a ist das Dämpfungselement 39a eingepresst, um Fehlströmungen am Dämpfungselement 39a vorbei zu vermeiden. Alternativ kann das Dämpfungselement 39a auch eingeklebt oder dergleichen fest und dichtend mit dem Haltebereich 43a verbunden sein.

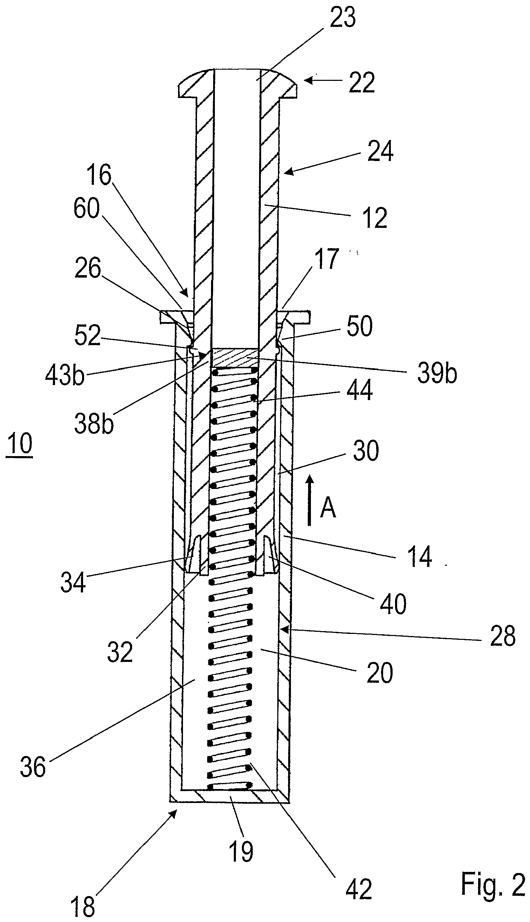

Die Figur 2 zeigt in Seitendarstellung und im Schnitt einen Anschlagdämpfer 10 gemäß einer weiteren Ausführungsform mit einem am Gleitstück 12 angeordneten Dämpfungsglied 39b, wobei das Gleitstück 12 vollständig ausgefahren dargestellt ist. Anhand der Figur 2 werden nun die Merkmale dieser weiteren Ausführungsform des Anschlagdämpfers 10 genauer beschrieben, welche zu den Merkmalen der bereits anhand von Figur 1 beschrieben Ausführungsform unterschiedlich sind.

Am geschlossen Ende 18 ist eine Bodenplatte 19 einstückig am Dämpferkörper 14 ausgebildet, gegen die sich die Feder 42 abstützt und welche den Hohlraum 36 begrenzt.

In das Gleitstück 12 ist eine Bohrung 13 als Verlängerung der langgestreckten Ausnehmung 44 angebracht. Fertigungstechnisch ist die Bohrung 12a und die Ausnehmung 44 als eine durchgehende, mittig in Längserstreckungsrichtung des Gleitstücks angebrachte Bohrung ausgeführt.

Der Querschnitt der Bohrung 13 definiert gleichzeitig die Öffnung 38b, in welche ein Dämpfungselement 39b aus einem porösen Material, beispielsweise einem Sintermaterial, angeordnet ist. Das Dämpfungselement 39a dient der aus der Öffnung 38a ausströmenden Luft als Strömungswiderstand und definiert durch seine Lage in der Bohrung die Erstreckung der Ausnehmung 44. Das Dämpfungselement 39a dient gleichzeitig der Feder 42 als Abstützung innerhalb der Ausnehmung 44.

Der Haltebereich 43b wird durch den an die Aussparung 44 angrenzenden Bereich der Innenwandung der Bohrung 13 gebildet. In den Haltebereich 43b ist das Dämpfungselement 39b eingepresst, um Fehlströmungen am Dämpfungselement 39b vorbei zu vermeiden. Alternativ kann das Dämpfungselement 39b auch eingeklebt oder dergleichen fest und dichtend mit dem Haltebereich 43b verbunden sein.

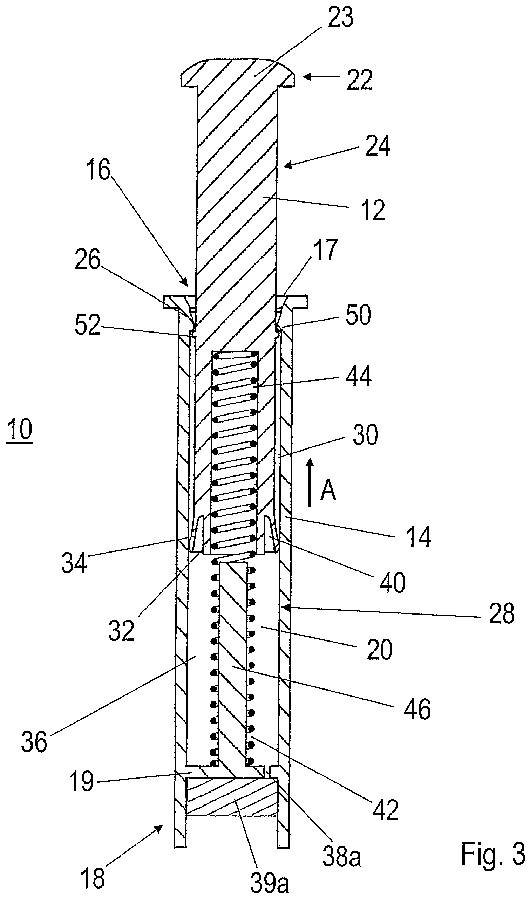

Die Figur 3 zeigt in Seitendarstellung und im Schnitt einen Anschlagdämpfer 10 gemäß noch einer weiteren Ausführungsform mit einem am geschlossenen Ende 18 des Dämpferkörpers 14 angeordneten Dämpfungsglied 39a, einem im Hohlraum angeordneten Stift 46 und vollständig ausgefahrenem Gleitstück 12. Anhand der Figur 3 werden nun die Merkmale dieser noch weiteren Ausführungsform des Anschlagdämpfers 10 genauer beschrieben, welche zu den Merkmalen der bereits anhand von Figur 1 beschrieben Ausführungsform unterschiedlich sind.

Der Gleitkörper 12 weist eine in seiner Längserstreckungsrichtung verlaufende, an seinem dem geschlossenen Ende 18 des Aufnahmeraumes zugeordneten Ende 32 angebrachte, langgestreckte Ausnehmung 44 auf, in welche sich die im Aufnahmeraum 20 angeordnete Feder 42 hineinerstreckt. Gleichzeitig ist an der Innenkontur des geschlossenen Endes 18 des Aufnahmeraumes 20 ein sich in Längserstreckungsrichtung des Aufnahmeraumes 20 erstreckender Stift 46 ausgeformt. Der Stift 46 hat ungefähr die gleiche Länge wie die langgestreckte Ausnehmung 44 im Gleitstück 12, so dass sich der Stift 46 im vollständig eingeschobenen Zustand des Gleitstücks 12 in dessen Ausnehmung 44 im wesentlichen vollständig hineinerstreckt. Die im Aufnahmeraum 20 angeordnete Feder 42 ist über den Stift 46 geführt und an dessen Außenkontur beweglich angeordnet.

Am geschlossen Ende 18 ist eine Bodenplatte 19 und dazu rechwinklig und mittig angeordnet der Stift 46 einstückig am Dämpferkörper 14 ausgebildet. Gegen die Bodenplatte 19 stützt sich die Feder 42 ab. In die Bodenplatte 19 ist seitlich neben dem Stift 46 bzw. der Feder 42 eine Öffnung 38a als Bohrung eingebracht. Auf der dem Hohlraum 36 abgewandten Seite der Bohrung 38a ist ein Dämpfungselement 39a aus einem porösen Material, beispielsweise einem Sintermaterial, in einem Haltebereich 43a angeordnet. Das Dämpfungselement 39a dient der aus der Öffnung 38a ausströmenden Luft als Strömungswiderstand.

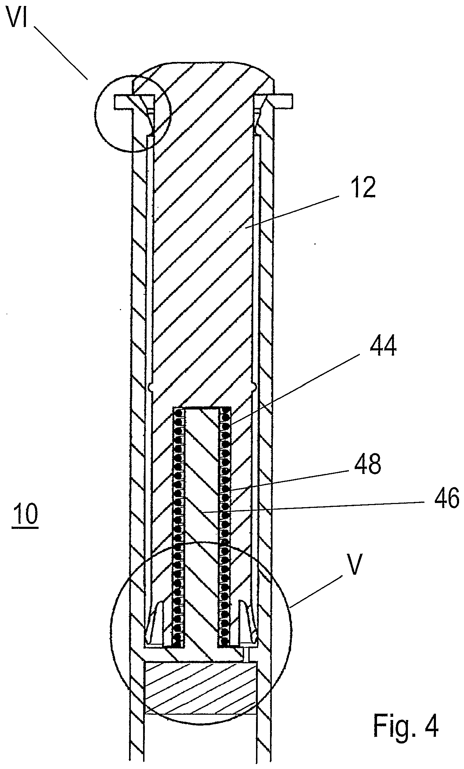

Die Figur 4 zeigt in Seitendarstellung und im Schnitt den Anschlagdämpfer 10 gemäß Figur 3 mit vollständig eingeschobenem Gleitstück 12. Zwischen dem Stift 46 und der in Längserstreckungsrichtung verlaufenden Ausnehmung 44 im Gleitstück 12 ist ein Spalt 48 ausgebildet, in welchem die Feder 42 beweglich angeordnet ist. Bei im wesentlichen vollständig eingeschobenem Gleitstück 12 ist die Feder 42 in dem Spalt 48 auf Block gefahren.

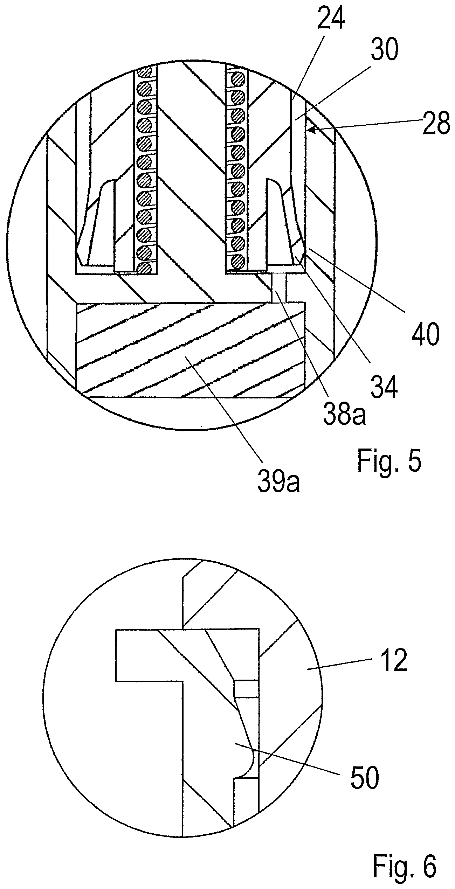

Zum Zwecke der weiteren näheren Erläuterung ist in Figur 2 am unteren, geschlossenen Abschnitt des Dämpfungskörpers 14 ein Kreis V angezeichnet, der den in Figur 5 in vergrößerter Teilseitendarstellung und im Teilschnitt dargestellten Bereich markiert. Weiterhin ist in Figur 4 am oberen, offenen Abschnitt des Dämpfungskörpers 14 ein weiterer Kreis Vl angezeichnet, der den in Figur 6 in vergrößerter Teilseitendarstellung und im Teilschnitt dargestellten Bereich markiert.

Die Figur 5 zeigt in vergrößerter Teilseitendarstellung und im Teilschnitt der Figur 4 den unteren, geschlossenen Bereich des Dämpfungskörpers 14 mit vollständig eingeschobenem Gleitstück 12. Der in Figur 3 gezeigte Hohlraum 36 ist durch das eingeschobene Gleitstück 12 nahezu vollständig ausgefüllt, so dass nur noch die Ausnehmung 40 einen Hohlraum bildet. Das Luftvolumen aus dem Hohlraum 36 ist durch die Kompressionswirkung des mit der Dichtlippe 34 versehen Gleitstücks 12 durch die Öffnung 38a in das Dämpfungsglied 39a hinein und durch dieses gedämpft, d.h. mit einem erhöhten Strömungswiderstand hindurch geströmt

Die Figur 6 zeigt in vergrößerter Teilseitendarstellung und im Teilschnitt der Figur 4 einen an der Außenkontur des Dämpfungskörper 10 am offenen Ende 16 des Aufnahmeraumes 20 angeordneten Bereich.

An dem Innenwandungsabschnitt des Aufnahmeraumes 20, welcher dem offenen Ende 16 des Dämpferkörpers zugeordnet ist, ist ein etwa ringförmig an der Innenkontur des Aufnahmeraumes 20 umlaufender Vorsprung 50 ausgebildet, welcher an der oder den Gleitflächen des Gleitstücks 12 in Anlage steht. Der Vorsprung 50 kann auch von einem separaten Element, beispielsweise einem Sprengring gebildet werden.

Am Gleitstück 12, zwischen der Außenkontur 24 des Gleitstücks 12 und der Innenkontur 28 des Aufnahmeraumes 20 ist ein in Figur 3 dargestellter das Gleitstück 12 ringförmig umschließender Vorsprung 52 angeordnet. Dieser Vorsprung 52 schlägt bei zumindest teilweisem Herausziehen des Gleitstücks 12 aus dem Aufnahmeraum 20 an dem Vorsprung 50 an, der an dem dem offenen Ende 16 des Dämpferkörpers 14 zugeordneten Innenwandungsabschnitt des Aufnahmeraumes 20 ausgebildet ist.

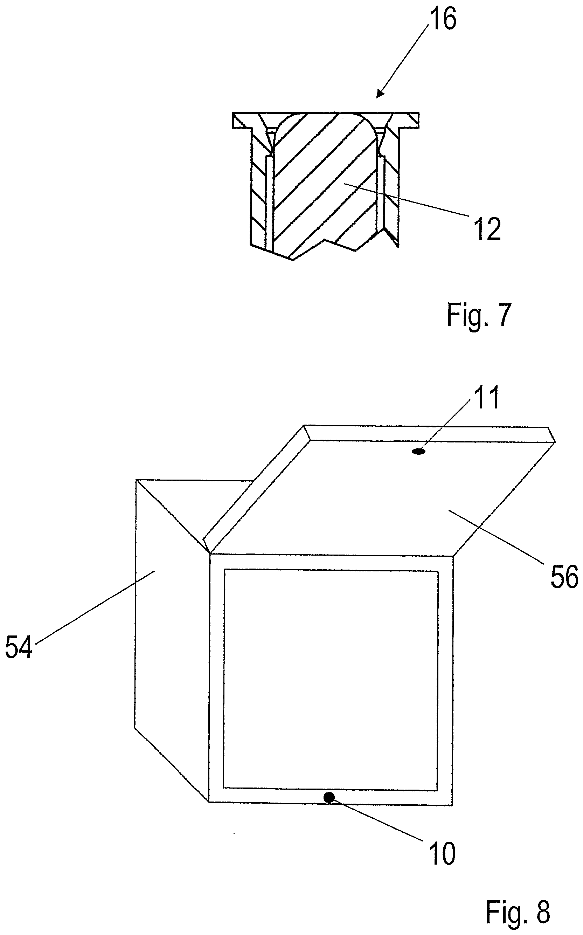

Die Figur 7 zeigt in Teilseitendarstellung und im Teilschnitt den oberen, offenen Bereich 16 des Dämpfungskörpers 14 mit vollständig eingeschobenem Gleitstück 12 gemäß einer alternativen Ausführungsform. Hierbei ist das Gleitstück 12 nicht mit einem ausgeformten Anschlagelement 22 versehen, sondern ist abgeflacht ausgeführt. Bei dieser Ausführungsform kann beispielsweise eine (nicht gezeigte) Schranktür am (nicht gezeigten) Möbelkörper bündig anliegen.

Die Figur 8 zeigt in schematisch-perspektivischer Darstellung einen Möbelkörper 54 mit einer Schließklappe 56, die durch einen Anschlagdämpfer 10 gemäß der Ausführungsform der Figur 3 gedämpft ist. Dabei ist der Anschlagdämpfer 10 derart am Möbelkörper 54 angeordnet, dass die Schließklappe 56 an den Anschlagdämpfer 10 in der Schließbewegung anschlägt. Zusätzlich kann das Anschlagelement 10 eine magnetischen Schnappeinrichtung 11 oder dergleichen Kontakteinrichtung zur lösbaren Verbindung des Anschlagdämpfers 10 mit der Schließklappe 56 aufweisen. Zusätzlich oder alternativ können noch weitere (nicht gezeigte) derartige Kontakt- oder Schließeinrichtungen am Möbelkörper 54 bzw. an der Schließklappe 56 vorgesehen sein

Der Anschlagdämpfer 10 kann in einer Sackbohrung in dem Möbelkörper 54 eingebracht sein. Dabei weist der Dämpferkörper 14 an der seinem offenen Ende 16 zugeordneten Außenkontur einen zumindest teilweise umlaufenden Ansatz 60 auf, welcher die Einführtiefe des Dämpferkörpers 14 in die Sackbohrung begrenzt. Der Ansatz 60 ist beispielsweise in der Figur 3 gezeigt.

## Patentansprüche

1. Anschlagdämpfer (10) mit einem in einem langgestreckten Dämpferkörper (14) mit einem offenen und einem geschlossenen Ende (16; 18) geführten Anschlagelement (22),
wobei der Dämpferkörper (14) einen Aufnahmeraum (20) für die Aufnahme eines mit dem Anschlagelement (22) verbundenen Gleitstücks (12) aufweist, wobei das Gleitstück (12) an seiner Aussenkontur (24) eine oder mehrere Gleitflächen aufweist, die an einem dem offenen Ende (16) des Dämpferkörpers (14) zugeordneten Innenwandungsabschnitt (26) des Aufnahmeraumes (20) anliegen,
wobei an dem in den Aufnahmeraum (20) hineinreichenden Ende (32) des Gleitstückes (12) eine an der Innenkontur (28) des Aufnahmeraumes (20) anliegende Dichteinrichtung (34) angeordnet ist,
wobei das in den Aufnahmeraum (20) hineinreichenden Ende (32) des Gleitstückes (12) und die Dichteinrichtung (34) mit der Innenkontur (28) des Aufnahmeraumes (20) einen Hohlraum (36) bildet, in welchem bei Druckbeaufschlagung des Gleitstückes (12) ein durch den sich aufbauenden Luftdruck im Hohlraum (36) erzeugter Gegendruck auf das Gleitstück (12) ausgeübt wird,
wobei der Hohlraum (36) zum Abbau des Luftdruckes zumindest eine Öffnung (38a; 38b) für das Entweichen der Luft aufweist,wobei die Dichteinrichtung zumindest eine elastische Dichtlippe (34) aufweist, welche bei einem sich aufbauenden Luftdruck in dem Hohlraum (36), der durch das in den Aufnahmeraum (20) hineinreichende Ende (32) des Gleitstückes (12) mit der Dichteinrichtung und der Innenkontur (28) des Aufnahmeraumes (20) gebildet ist, an die Innenkontur (28) des Aufnahmeraumes (20) gedrückt wird, derart, dass eine weitgehend luftdichte Gleitverbindung gebildet ist, wobei die elastische Dichtlippe (34) im Wesentlichen in Richtung auf das geschlossene Ende (18) des Aufnahmeraumes (20) hin geneigt, zumindest teilweise von der Außenkontur (24) des Gleitstückes (12) beabstandet und am in den Aufnahmeraum (20) hineinreichenden Ende (32) des Gleitstückes (12) angeordnet ist,
und wobei mit der Öffnung (38a, 38b) ein Dämpfungsglied (39a; 39b) zusammenwirkt, welches für die durch die Öffnung (38a; 38b) entweichende Luft einen Strömungswiderstand bildet,
**dadurch gekennzeichnet,**
**dass** die elastische Dichtlippe (34) der Dichteinrichtung in der Beabstandung (30) zwischen der Innenkontur (28) des Aufnahmeraumes (20) und der Außenkontur (24) des Gleitstücks (12) beim zumindest teilweisen Herausziehen des Gleitstücks (12) aus dem Aufnahmeraum (20) aufgrund des im Hohlraum (36) entstehenden Unterdrucks von der Innenkontur (28) des Aufnahmeraumes (28) beabstandet ist, derart, dass Luft durch die Beabstandung (30) zwischen der Innenkontur (28) des Aufnahmeraumes (20) und der Außenkontur (24) des Gleitstücks (12) an der Dichtlippe (34) vorbei in den Hohlraum (36) einströmt,
**dass** die Öffnung (38a,38b) einen Durchmesser D < 0,2mm, und dass das Verhältnis der Querschnittsfläche des als Kolben gebildeten Gleitstückes (12) in dem dem Hohlraum (36) zugewandten Bereich zu dem Öffnungsquerschnitt der Öffnung (38a, 38b) grösser als 4000/1 ist.

2. Anschlagdämpfer nach Anspruch 1, **dadurch gekennzeichnet, dass** das Dämpfungsglied (39a; 39b) ein poröses Material als Luftströmungswiderstand aufweist und /oder dass das Dämpfungsglied (39a; 39b) ein Element aus Sintermaterial, aus Kunststoffschaum, aus Textilmaterial, aus Filzmaterial oder aus dergleichen einen Luftströmungswiderstand bildenden Material aufweist.

3. Anschlagdämpfer nach Anspruch 1 oder 2, **dadurch gekennzeichnet, dass** die Öffnung (38a) am geschlossenen Ende (18) des Dämpferkörpers (14) angeordnet ist und/oder dass die Öffnung (38b) am Gleitstück (12) angeordnet ist.

4. Anschlagdämpfer nach Anspruch 3, **dadurch gekennzeichnet, dass** das Dämpfungsglied (39a) in einem am Dämpferkörper (14) ausgebildeten Haltebereich (43a) eingepasst angeordnet ist, wobei die gesamte Luftströmung das Dämpfungsglied (39) durchströmt.

5. Anschlagdämpfer nach einem der Ansprüche 1 bis 4, **dadurch gekennzeichnet, dass** das Dämpfungsglied (39a; 39b) an der dem Hohlraum (36) abgewandten Seite der Öffnung (38a; 38b) angeordnet ist oder dass das Dämpfungsglied an der dem Hohlraum (36) zugewandten Seite der Öffnung (38a; 38b) angeordnet ist.

6. Anschlagdämpfer nach einem der Ansprüche 1 bis 5, **dadurch gekennzeichnet, dass** das Dämpfungsglied innerhalb der Öffnung (38a; 38b) angeordnet ist.

7. Anschlagdämpfer nach einem der Ansprüche 1 bis 6, **dadurch gekennzeichnet, dass** der Dämpferkörper (12) eine im Aufnahmeraum (20) angeordnete Feder (42) aufweist, die das Gleitstück (12) zumindest teilweise aus dem Aufnahmeraum (20) herausdrückt und gegen deren Federkraft das Gleitstück (12) in den Aufnahmeraum (20) einschiebbar ist.

8. Anschlagdämpfer nach einem der Ansprüche 1 bis 7, **dadurch gekennzeichnet, dass** an dem dem offenen Ende (16) des Dämpferkörpers (14) zugeordneten Innenwandungsabschnitt des Aufnahmeraumes (20) zumindest ein Vorsprung (50) ausgebildet ist, welcher an der oder den Gleitflächen des Gleitstücks (12) in Anlage steht.

9. Anschlagdämpfer nach Anspruch 8, **dadurch gekennzeichnet, dass** am Gleitstück (12) zwischen der Außenkontur (24) desselben und der Innenkontur (28) des Aufnahmeraumes (20) zumindest ein Vorsprung (52) angeordnet ist, der bei zumindest teilweisem Herausziehen des Gleitstücks (12) aus dem Aufnahmeraum (20) an dem Vorsprung (50) anschlägt, der an dem dem offenen Ende (16) des Dämpferkörpers (14) zugeordneten Innenwandungsabschnitt des Aufnahmeraumes (20) ausgebildet ist.

10. Anschlagdämpfer nach einem der Ansprüche 1 bis 9,
**dadurch gekennzeichnet,**
**dass** der Dämpferkörper (14) in eine Sackbohrung (58) in einem Aufnahmekörper (54) einführbar ist, und
**dass** der Dämpferkörper (14) an der seinem offenen Ende (16) zugeordneten Außenkontur (24) einen zumindest teilweise umlaufenden Ansatz (60) aufweist, welcher die Einführtiefe des Dämpferkörpers (14) in die Sackbohrung (58) begrenzt.

11. Anschlagdämpfer nach einem der Ansprüche 1 bis 10, **dadurch**
**gekennzeichnet, dass** der Gleitkörper (12) zumindest teilweise eine im Wesentlichen in seiner Längserstreckungsrichtung verlaufende, an seinem dem geschlossenen Ende (18) des Aufnahmeraumes (20) zugeordneten Ende angebrachte, langgestreckte Ausnehmung (44) aufweist, in welche sich die im Aufnahmeraum (20) angeordnete Feder (42) hineinerstreckt.

12. Anschlagdämpfer nach Anspruch 11,
**dadurch gekennzeichnet,**
**dass** an der Innenkontur des geschlossenen Endes (18) des Aufnahmeraumes (20) ein sich in Längserstreckungsrichtung des Aufnahmeraumes (20) erstreckender Stift (46) ausgeformt ist, welcher sich im vollständig eingeschobenen Zustand des Gleitstücks (12) in dessen in Längserstreckungsrichtung verlaufende Ausnehmung (44) im wesentlichen vollständig hineinerstreckt
und/ oder dass die im Aufnahmeraum (20) angeordnete Feder (42) über den Stift (46) geführt an dessen Außenkontur beweglich angeordnet ist, und dass zwischen dem Stift (46) und der in Längserstreckungsrichtung verlaufenden Ausnehmung (44) im Gleitstück (12) eine Beabstandung (48) ausgebildet ist, derart, dass die Feder (42) an der Innenkontur der Ausnehmung beweglich angeordnet ist.

13. Anschlagdämpfer nach Anspruch 12, **dadurch gekennzeichnet, dass** bei im
Wesentlichen vollständig eingeschobenem Gleitstück (12) die Feder (42) in der Beabstandung (48) zwischen dem Stift (46) und der Ausnehmung (44) auf Block gefahren ist.

14. Anschlagdämpfer nach einem der Ansprüche 1 bis 13, **dadurch gekennzeichnet, dass** das Anschlagelement (22) einen Anschlagkopf (23) aufweist, welcher am offenen Ende (16) des Dämpfungskörpers (14) über den Randbereich (17) der Öffnung zumindest teilweise hinausragt und bei im Wesentlichen vollständig eingeschobenem Gleitstück (12) an dem Randbereich (17) anschlägt.

15. Anschlagdämpfer nach einem der Ansprüche 1 bis 14, **dadurch**
**gekennzeichnet, dass** das Gleitstück (12) mit der Dichteinrichtung (34) einstückig ausgebildet ist, und/oder
dass das Anschlagelement eine magnetischen Schnappeinrichtung oder dergleichen Kontakteinrichtung zur lösbaren Verbindung des Anschlagdämpfers mit einem Verbindungselement aufweist.

16. Anschlagdämpfer nach einem der Ansprüche 1 bis 15, **dadurch**
**gekennzeichnet dass**, der Durchmesser der Öffnung (38a, 38b) kleiner als 0,1 mm ist.

## Claims

1. Stop damper (10) with a stop element (22) guided in an elongated damper body (14) having an open and a closed end (16; 18),
wherein the damper body (14) has a receiving space (20) to receive a slider (12) connected to the stop element (22), wherein the slider (12) has one or more sliding surfaces on its outer contour (24) which abut the inner wall section (26) of the receiving space (20) at one associated open end (16) of the damper body (14),
wherein a sealing means (34) is arranged adjacent to the inner contour (28) of the receiving space (20) at the end (32) of the slider (12) extending into the receiving space (20),
wherein the end (32) of the slider (12) extending into the receiving space (20) and the sealing means (34) form a cavity (36) with the inner contour (28) of the receiving space (20), wherein, upon exertion of pressure of the slider (12), a counter pressure generated by the build-up of air pressure in the cavity (36), is exerted on the slider (12),
wherein the cavity (36) for the reduction of air pressure comprises at least one opening (38a; 38b) to allow the air to escape, wherein the sealing means comprises at least one elastic sealing lip (34), wherein, during the build up of air pressure in the cavity (36) formed by the end (32) of the slider (12) extending into the receiving space (20) with the sealing means and the inner contour (28) of the receiving space (20), the elastic sealing lip (34) is pressed against the inner contour (28) of the receiving space (20) in order to form a substantially airtight sliding connection, wherein the elastic sealing lip (34) is substantially inclined towards the closed end (18) of the receiving space (20), at least partially spaced from the outer contour (24) of the slider (12), and arranged on the end (32) of the slider (12) extending into the receiving space (20), and
wherein a damping element (39a; 39b) cooperates with the opening (38a, 38b), to form a flow resistance to the air escaping through the opening (38b 38a)
**characterized in that**
the elastic sealing lip (34) of the sealing means is distanced from the inner contour (28) of the receiving space (28) in the space (30) between the inner contour (28) of the receiving space (20) and the outer contour (24) of the slider (12) upon at least partial withdrawal of the slider (12) from the receiving space (20), because of the negative pressure resulting in the cavity (36), so that air flows into the cavity (36) through the space (30) between the inner contour (28) of the receiving space (20) and the outer contour ( 24) of the slider (12) at the sealing lip (34),
the opening (38a, 38b) has a diameter 0 < 0.2 mm, and the ratio of the cross-sectional area of the slider (12), which is formed as a piston in the region facing the cavity (36), to the cross-section of the opening (38a, 38b), is greater than 4000/1.

2. Stop damper according to claim 1,
**characterized in that**
the damping element (39a; 39b) comprises a porous material as an air flow resistance and/or the damping element (39a; 39b) is an element made of sintered material, plastic foam, textile material, felt material or similar material forming an air flow resistance.

3. Stop damper according to claim 1 or 2,
**characterized in that**
the opening (38a) is arranged at the closed end (18) of the damper body (14), and/or the opening (38b) is arranged on the slider (12).

4. Stop damper according to claim 3,
**characterized in that**
the damping element (39a) is arranged in a holding range (43a) formed on the damper body (14), wherein the entire air flow flows through the damping element (39).

5. Stop damper according to one of the claims 1 to 4,
**characterized in that**
the damping element (39a; 39b) is arranged on the side of the opening (38a; 38b) facing away from the cavity (36), or the damping element is arranged on the side of the opening (38a; 38b) facing the cavity (36).

6. Stop damper according to one of the claims 1 to 5,
**characterized in that**
the damping element is arranged within the opening (38a; 38b).

7. Stop damper according to one of the claims 1 to 6,
**characterized in that**
the damper body (12) comprises a spring (42) arranged in the receiving space (20), which at least partially pushes the slider (12) out of the receiving space (20), and against whose spring force the slider (12) is insertable into the receiving space (20).

8. Stop damper according to one of the claims 1 to 7,
**characterized in that** at least a projection (50) is formed at the inner wall section of the receiving space (20) associated with the open end (16) of the damper body (14), to abut the sliding surfaces of the slider (12).

9. Stop damper according to claim 8,
**characterized in that**
at least a projection (52) is arranged on the slider (12) between its outer contour (24) and the inner contour (28) of the receiving space (20), wherein, upon at least partial withdrawal of the slider (12) out of the receiving space (20), it abuts the projection (50) formed on the inner wall section of the receiving space (20) associated with the open end (16) of the damper body (14).

10. Stop damper according to one of the claims 1 to 9,
**characterized in that**
the damper body (14) is insertable in a blind hole (58) in a receiving body (54), and
the damper body (14) comprises an at least partially circumferential shoulder (60) on the outer contour (24) associated with its open end (16) to limit the insertion depth of the damper body (14) in the blind hole (58).

11. Stop damper according to one of the claims 1 to 10,
**characterized in that**
the slider (12) at least partially comprises an elongated recess (44) substantially extending in its longitudinal extension direction at the end associated with the closed end (18) of the receiving space (20), and in which the spring (42) arranged in the receiving space (20) extends.

12. Stop damper according to claim 11,
**characterized in that**
a pin (46) extending in the longitudinal extension direction of the receiving space (20) is formed on the inner contour of the closed end (18) of the receiving space (20), wherein it completely substantially extends in the fully inserted state of the slider (12) in the longitudinally extension direction of the recess (44).
and/or the spring (42) arranged in the receiving space (20) is arranged to be movably guided on the outer contour via the pin (46), and a space (48) is formed between the pin (46) and the recess (44) in the slider (12) extending in the longitudinal extension direction, so that the spring (42) is movably guided on the inner contour of the recess.

13. Stop damper according to claim 12,
**characterized in that**
in the case of the substantially completely inserted slider (12), the spring (42) in the space (48) between the pin (46) and the recess (44) is driven to block.

14. Stop damper according to one of the claims 1 to 13,
**characterized in that**
the stop element (22) comprises a stop head (23), which at least partially protrudes over the edge region (17) of the opening at the open end (16) of the damping body (14), and abuts the substantially completely inserted slider (12) at the edge region (17).

15. Stop damper according to one of the claims 1 to 14,
**characterized in that**
the slider (12) is formed integrally with the sealing device (34), and/or
the stop element has a magnetic snap-action device or a similar contact device for releasably connecting the stop damper with a connection element.

16. Stop damper according to any one of the claims 1 to 15, **characterized in that**
the diameter of the opening (38a, 38b) is less than 0.1 mm.

## Revendications

1. Amortisseur de butée (10) avec un élément de butée (22) guidé dans un corps d'amortisseur (14) allongé avec une extrémité ouverte et une extrémité fermée (16 ; 18),
le corps d'amortisseur (14) comprenant un espace de logement (20) pour le logement d'une pièce coulissante (12) reliée avec l'élément de butée (22),
la pièce coulissante (12) comprenant, au niveau de son contour externe (24), une ou plusieurs surfaces de coulissement, qui s'appuient contre une portion de paroi interne (26) de l'espace de logement (20), correspondant à l'extrémité ouverte (16) du corps d'amortisseur (14),
un dispositif d'étanchéité (34), qui s'appuie contre le contour interne (28) de l'espace de logement (20), étant disposé au niveau de l'extrémité (32) de la pièce coulissante (12) qui dépasse dans l'espace de logement (20),
l'extrémité (32) de la pièce coulissante (12), qui dépasse dans l'espace de logement (20), et le dispositif d'étanchéité (34) formant, avec le contour interne (28) de l'espace de logement (20), un espace creux (36), dans lequel, lors de l'application d'une pression sur la pièce coulissante (12), une contre-pression, générée par la pression d'air dans l'espace creux (36), est exercée sur la pièce coulissante (12),
l'espace creux (36) comprenant, pour la diminution de la pression d'air, au moins une ouverture (38a ; 38b) pour l'échappement de l'air, le dispositif d'étanchéité comprenant au moins une lèvre d'étanchéité élastique (34) qui, lorsque la pression augmente dans l'espace creux (36), qui est formé par l'extrémité (32) de la pièce coulissante (12) qui dépasse dans l'espace de logement (20), avec le dispositif d'étanchéité et le contour interne (28) de l'espace de logement (20), est comprimée contre le contour interne (28) de l'espace de logement (20) de façon à ce qu'une liaison coulissante largement étanche à l'air soit établie, la lèvre d'étanchéité élastique (34) étant inclinée globalement en direction de l'extrémité fermée (18) de l'espace de logement (20), au moins partiellement écartée du contour externe (24) de la pièce coulissante (12) et disposée au niveau de l'extrémité (32) de la pièce coulissante (12) qui dépasse dans l'espace de logement (20),
et, un organe d'amortissement (39a ; 39b), qui forme une résistance pour l'air qui s'échappe par l'ouverture (38a ; 38b), interagissant avec l'ouverture (38a, 38b),
**caractérisé en ce que**
la lèvre d'étanchéité élastique (34) du dispositif d'étanchéité est écartée, dans l'écartement (30) entre le contour interne (28) de l'espace de logement (20) et le contour externe (24) de la pièce coulissante (12), lors d'une extraction au moins partielle de la pièce coulissante (12) hors de l'espace de logement (20), du fait de la dépression apparaissant dans l'espace creux (36), du contour interne (28) de l'espace de logement (28) de façon à ce que de l'air s'écoule par l'écartement (30) entre le contour interne (28) de l'espace de logement (20) et le contour externe (24) de la pièce coulissante (12) en passant par la lèvre d'étanchéité (34),
l'ouverture (38a, 38b) présente un diamètre D < 0,2 mm et **en ce que** le rapport entre la surface de la section de la pièce coulissante (12), conçue comme un piston dans la zone orientée vers l'espace creux (36), et la section de l'ouverture (38a, 38b) est supérieur à 4000/1.

2. Amortisseur de butée selon la revendication 1, **caractérisé en ce que** l'organe d'amortissement (39a ; 39b) comprend un matériau poreux en tant que résistance à l'écoulement de l'air et/ou **en ce que** l'organe d'amortissement (39a ; 39b) comprend un élément constitué d'un matériau fritté, d'une mousse de matière plastique, d'un matériau textile, d'un matériau de type feutre ou d'un autre matériau offrant une résistance à l'écoulement de l'air.

3. Amortisseur de butée selon la revendication 1 ou 2, **caractérisé en ce que** l'ouverture (38a) est disposée au niveau de l'extrémité fermée (18) du corps d'amortisseur (14) et/ou **en ce que** l'ouverture (38b) est disposée sur la pièce coulissante (12).

4. Amortisseur de butée selon la revendication 3, **caractérisé en ce que** l'organe d'amortissement (39a) est disposé de manière adaptée dans une zone de maintien (43a) réalisée sur le corps d'amortisseur (14), l'ensemble de l'écoulement traversant l'organe d'amortissement (39).

5. Amortisseur de butée selon l'une des revendications 1 à 4, **caractérisé en ce que** l'organe d'amortissement (39a ; 39b) est disposé sur le côté de l'ouverture (38a ; 38b) opposé à l'espace creux (36) ou **en ce que** l'organe d'amortissement est disposé sur le côté de l'ouverture (38a ; 38b) orienté vers l'espace creux (36).

6. Amortisseur de butée selon l'une des revendications 1 à 5, **caractérisé en ce que** l'organe d'amortissement est disposé à l'intérieur de l'ouverture (38a ; 38b).

7. Amortisseur de butée selon l'une des revendications 1 à 6, **caractérisé en ce que** le corps d'amortisseur (12) comprend un ressort (42), disposé dans l'espace de logement (20), qui expulse la pièce coulissante (12) au moins partiellement hors de l'espace de logement (20) et contre la force élastique duquel la pièce coulissante (12) peut être insérée dans l'espace de logement (20).

8. Amortisseur de butée selon l'une des revendications 1 à 7, **caractérisé en ce que**, au niveau de la portion de paroi interne de l'espace de logement (20) correspondant à l'extrémité ouverte (16) du corps d'amortisseur (14), se trouve au moins une saillie (50) qui est en appui contre la ou les surfaces de coulissement de la pièce coulissante (12).

9. Amortisseur de butée selon la revendication 8, **caractérisé en ce que**, sur la pièce coulissante (12), entre le contour externe (24) de celle-ci et le contour interne (28) de l'espace de logement (20), se trouve au moins une saillie (52) qui, lors d'une extraction au moins partielle de la pièce coulissante (12) hors de l'espace de logement (20), est en butée contre la saillie (50), qui est prévue au niveau de la portion de paroi interne de l'espace de logement (20) correspondant à l'extrémité ouverte (16) du corps d'amortisseur (14).

10. Amortisseur de butée selon l'une des revendications 1 à 9, **caractérisé en ce que**
le corps d'amortisseur (14) peut être introduit dans un alésage borgne (58) dans un corps de logement (54) et
le corps d'amortisseur (14) comprend, au niveau du contour externe (24) correspondant à son extrémité ouverte (16), un embout (60) au moins partiellement circulaire, qui limite la profondeur d'insertion du corps d'amortisseur (14) dans l'alésage borgne (58).

11. Amortisseur de butée selon l'une des revendications 1 à 10, **caractérisé en ce que** le corps coulissant (12) comprend un évidement (44) allongé s'étendant, au moins partiellement dans sa direction d'extension longitudinale, réalisé au niveau de son extrémité correspondant à l'extrémité fermée (18) de l'espace de logement (20), dans lequel s'étend le ressort (42) disposé dans l'espace de logement (20).

12. Amortisseur de butée selon la revendication 11, **caractérisé en ce que**
sur le contour interne de l'extrémité fermée (18) de l'espace de logement (20), est formée une goupille (46), s'étendant dans la direction d'extension longitudinale de l'espace de logement (20), qui s'étend globalement entièrement, dans l'état entièrement inséré de la pièce coulissante (12), dans son évidement (44) s'étendant dans la direction d'extension longitudinale,
et/ou **en ce que** le ressort (42) disposé dans l'espace de logement (20) est disposé de manière mobile et guidée par l'intermédiaire de la goupille (46) au niveau de son contour externe et **en ce que**, entre la goupille (46) et l'évidement (44) s'étendant dans la direction d'extension longitudinale dans la pièce coulissante (12), est réalisée un écartement (48) de façon à ce que le ressort (42) soit disposé de manière mobile sur le contour interne de l'évidement.

13. Amortisseur de butée selon la revendication 12, **caractérisé en ce que**, lorsque la pièce coulissante (12) est globalement entièrement insérée, le ressort (42) est déplacé dans l'écartement (48) entre la goupille (46) et l'évidement (44) jusqu'au blocage.

14. Amortisseur de butée selon l'une des revendications 1 à 13, **caractérisé en ce que** l'élément de butée (22) comprend une tête de butée (23) qui dépasse au moins partiellement au niveau de l'extrémité ouverte (16) du corps d'amortissement (14) au-dessus du bord (17) de l'ouverture et qui, lorsque la pièce coulissante (12) est globalement entièrement insérée, est en butée contre le bord (17).

15. Amortisseur de butée selon l'une des revendications 1 à 14, **caractérisé en ce que** la pièce coulissante (12) est formée d'une seule pièce avec le dispositif d'étanchéité (34) et/ou
**en ce que** l'élément de butée comprend un dispositif d'encliquetage magnétique ou un dispositif de contact similaire pour une liaison amovible entre l'amortisseur de butée et un élément de liaison.

16. Amortisseur de butée selon l'une des revendications 1 à 15, **caractérisé en ce que** le diamètre de l'ouverture (38a, 38b) est inférieur à 0,1 mm.
